# EUROPEAN PATENT SPECIFICATION

(11) **EP 4 612 633 B1**
(45) Date of publication and mention of the grant of the patent: **23.09.2026**
(21) Application number: 23907984.1
(22) Date of filing: 20.09.2023
(51) Int. Cl.: B42D 25/36, B42D 25/378, B42D 25/415, B41M 3/14, B05D 1/00, B05D 5/06, G06Q 30/00, G06V 20/80

(54) **PUF-BASED SECURITY LABEL PRODUCTION METHOD FROM FOODSTUFFS**
PUF-BASIERTES SICHERHEITSETIKETTHERSTELLUNGSVERFAHREN AUS LEBENSMITTELN
PROCÉDÉ DE PRODUCTION D'ÉTIQUETTES DE SÉCURITÉ À BASE DE PUF À PARTIR DE PRODUITS ALIMENTAIRES

(30) Priority: 17.02.2023 TR 2023001813; 20.12.2022 TR 2022019761
(43) Date of publication of application: 10.09.2025
(73) Proprietor: T.C. Erciyes Universitesi, 38280 Talas/Kayseri (TR); Kayseri Universitesi Rektorlugu, 38280 Talas/Kayseri (TR)
(72) Inventor: ONSES, Mustafa Serdar, 38030 Melikgazi/Kayseri (TR); KIREMITLER, Nuri Burak, 38030 Melikgazi/Kayseri (TR); KALAY, Mustafa, 38280 Talas/Kayseri (TR); ESIDIR, Abidin, 38030 Melikgazi/Kayseri (TR); KAYACI, Nilgun, 38280 Talas/Kayseri (TR)
(74) Representative: Yalçiner Patent and Consulting Ltd.
(86) International application number: PCT/TR2023/051001
(87) International publication number: WO 2024/136791

(56) References cited:
- WO-A1-2021/072006
- WO-A1-2021/072006
- WO-A1-2021/076216
- WO-A1-2021/076217
- WO-A1-2021/133305
- US-A1- 2020 082 235
- US-A1- 2020 412 555

## Description

### Technical Field

The invention relates to functions that cannot be physically cloned from foodstuffs and relates to the security label production method based on PUF (Physically Unclonable Function) from foodstuffs.

### State of the Art

The violation of counterfeit products and intellectual property rights is a fundamental problem globally today. Anti-counterfeiting technologies are critical considering that economic losses pose a major threat to human health as well as labor losses. Anti-counterfeiting technologies are essential for social welfare and security, considering this wide range of daily consumer products, covering all specific products with material and cultural values. The security labels used to prevent counterfeiting are generally produced by deterministic and stochastic processes. The production of deterministic security labels, also known as the traditional method, does not involve any randomness. Since they are designed by the manufacturer and produced in a way that will always give the same output, they can be reproduced in principle. Therefore, security labels produced by deterministic processes can be copied and imitated due to their nature, even if they are produced complexly in different forms such as dimensional, spatial, or geometric shapes. For example, a security system is created with holograms or watermarks created in physically different forms such as shapes, numbers or symbols created on globally used paper currencies. Even if it provides a certain level of protection, the security labels created by deterministic production processes are insufficient to prevent the production of counterfeit money with the developing technology today.

Stochastic production processes can be used as a solution to prevent copying of products. The basis of the security labels created by the stochastic manufacturing processes is based on randomness. They are produced in a way that gives a different response each time. It is not possible to repeat the security labels even by the manufacturer. Therefore, stochastic security labels, which are based on randomness in their production, cannot be imitated by their nature. The random production of our security label system and authentication processes can be confirmed by using specific standards of randomness that are accepted worldwide by NIST (National Institute of Standards and Technology).

There are companies working on information security, artificial intelligence, information processing, etc., based on PUF. Today, it is located on platforms established to provide digitalization and secure transfer of information and documents.

When the current PUF-based security label concepts in the literature are examined, although original systems and methods have been studied in the field, values and gains have been obtained for new working platforms within the scope of anti-counterfeiting technologies. Studies of these achievements in application areas are also critical in anti-counterfeiting technology. When the application areas of the security label concepts are examined, it is known that it is a wide field of study from daily consumption products to high value-added specific products. An important issue that closely concerns anti-counterfeiting technology is the security of the products we consume in daily life. Drug counterfeiting, which is a global problem, can be given as an example in this regard. There are significant deficiencies in the literature in terms of integrating PUF-based security label concepts with edible PUF-based security systems in this counterfeiting field, which poses a great threat to human life as well as economic losses in the world market. In addition to specific products with high added value, the issue of security and protection of human health is essential. In the literature studies, since PUF-based security systems contain toxic functional molecules for the human body, it is not possible to integrate daily consumption products with a security system. In this sense, although there are only a few studies created with edible PUF-based security label systems on drugs in the literature, they constitute a good example for the studies to be carried out in this field. A recently published article study (Nature Communications, 2020, 11, 328) can be shown as an example of edible PUF-based security label systems. However, considering the rapid denaturation problems, production cost and difficulties in obtaining the natural proteins used in the publication, the importance of the methods and materials used comes to the forefront.

The first example of scattering based PUFs in the literature is based on the analysis of the final image of the laser beam that cannot pass through opaque structures such as randomly distributed fibers in a transparent polymer matrix (Science, 2002, 297.5589: 2026-2030). Considering the current studies based on PUF, the poly (2-vinyl pyridine) thin film was coated on the polystyrene grafted substrate surface and a thermal annealing process was applied. Structures randomly positioned on the surface that are not wetted by the effect of temperature were formed with the dewetting instabilities of the polymer. Plasmonic PUFs were produced by binding gold nanoparticles to random structures consisting of poly (2-vinyl pyridine) (ACS applied materials & interfaces, 2021, 13.9: 11247- 11259.). By adjusting the on-site crystallization conditions and using the ion-crystalline property of perovskite, a unclonable multi-layer (5-ply codes) fingerprint system resulting from the random crystallization of perovskite ions and Ostwald maturation was presented (ACS Applied Materials & Interfaces, 2020, 12.35: 39649 - 39656.). A PUF concept based on the random properties of an organic crystal and atomic core heterostructure by in situ crystallization of chaotic phosphorous patterns on MoS₂ films is presented (Advanced Materials, 2021, 33.44: 2102542.). After the organic molecule dispersion with green fluorescence feature was coated as a film with a spin-coating device on various substrates, PUF-based labels with multilevel coding capacity after thermal annealing were produced (Advanced Functional Materials, 2022, 32.14: 2108675.). When current studies based on edible PUF are examined, they have been produced directly on pharmaceutical tablets by using edible photonic biomaterials such as fluorescent proteins and silk proteins. Instead of packaging, an edible PUF-based security labels system that can fluoresce at different wavelengths is offered directly on the drug surface (Nature communications, 2020, 11.1: 1-11.). The hollow mesoporous TiO₂ was produced by mixing with the dye particles obtained from the ink fish ink in an aqueous environment and dried after being dripped on the surface. Depending on the size of the TiO₂ particle and the concentration of the dye obtained from the fish ink, an edible security label concept is presented in different color scales (Advanced Optical Materials, 2022, 10.4: 2102125.).

Patent document WO2021076217 focuses on the production of PUF on the Internet of Things (loT) security. When patent document WO2021076217 is examined, a method for creating a function that cannot be physically cloned for pharmaceutical authentication is disclosed. This method includes adding the edible PUF to a pharmaceutical with a random distribution, creating a cryptographic key based on the edible element that has been randomly distributed and pasted.

When patent document numbered USB9361562 B1 is examined, it is related to the identification and verification of drugs using fractal coded images in a multi-layer scheme.

Patent document numbered US20170173262 A1 discloses a medical system comprising one or more sensors associated with one or more actuators. It has been mentioned that an injection device such as a sensor or insulin pump can be fixed with PUF, which is a physical structure that is easy to evaluate but difficult to predict. They suggested that a PUF may be used to generate an authentication key, that it is advantageous to use one or more PUFs in medical devices for predefined randomness, aging, entropy, etc. values and properties of this PUF.

Patent document numbered US20100209632 A1 is intended for fluorescent inks and markers containing carbon nanotubes. The present invention is directed to the making and use of such inks and tokens for security applications (for example, anti-counterfeiting).

When patent document US8530863 B2 is examined, the document in which distinctive features such as various absorption and emission are used and the systems and methods for product authentication are disclosed. It has been stated that emission signatures in the form of fluorescent coatings, inks and substrates are used for the verification and protection of items such as documents, currency, tobacco, luxury goods and pharmaceutical packaging.

When the field of anti-counterfeiting technology is examined, it is seen that its infrastructure has progressed from past to present by strengthening. Problems arising from the risk of imitation of security label concepts made with deterministic production processes have pushed stochastic production processes with randomness on the basis of their work in the field of anti-counterfeiting technology.

PUF-based security label systems, which cannot be imitated due to their nature, are in high demand today, and it is seen that studies in this field have moved further in the current period. In addition to the presentation of stochastic and deterministic production processes as a hybrid system, multilayer security systems are created by adding specific features of different functional molecules such as fluorescence and plasmonic hotspots to PUF-based security label concepts.

Document WO 2021/072006 A1 discloses a PUF-based security label production method.

In terms of ensuring security, the new generation security labels are limited in terms of both the lack of studies in an important field such as daily consumption products and the technical and material applied, even if they meet the needs. In this sense, it is thought that edible PUF should be an important field of study in the current period and in this direction, an effective low-cost security label system that provides practical application for the literature should be brought to the literature.

### Objects and Brief Description of the Invention

The present invention relates to the PUF-based security label production method from foodstuffs in order to bring solutions to the above-mentioned technical problems and to bring new advantages to the related technical field.

The most important advantage of the invention compared to its counterparts using security measures such as barcode, QR code, which are other traditional deterministic coding approaches, is that it is non-repeatable with the invention, therefore, counterfeiting is not possible.

The main object of the invention is to provide a label that provides a unique encryption of each asset in edible products that directly concern human health in industries, especially in the food and pharmaceutical industry, and have an important economic share in the world market, providing a serious preventive mechanism in the fight against counterfeiting, which is a major problem in these areas.

To enable multi-layer security levels to be achieved by adsorbing food dyes capable of fluorescence at specific wavelengths to CSNPs in PUF-based security label systems produced from particulate foodstuffs with the invention.

Another object of the invention is to provide PUF-based security label production by using foodstuffs that will not create a threatening element even in human contact or ingestion.

One of the most important features of the invention is that the structures that allow original coding due to their stochastic locations are edible, biocompatible, biodegradable and have multiple features that can give layered answers that can be confirmed by different analysis systems.

### Definitions of Figures Describing the Invention

The figures and related descriptions used to better explain the PUF-based security label production method, one of the foodstuffs developed by this invention, are as follows.

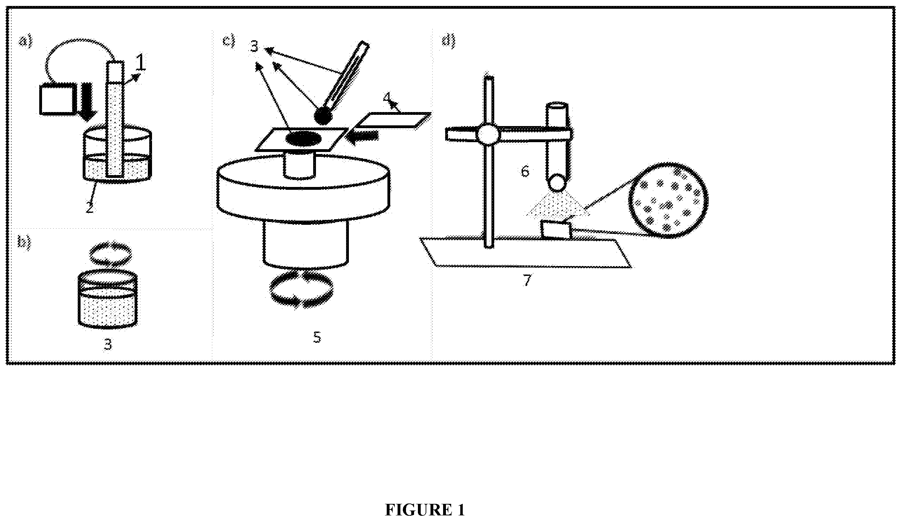

Figure 1. PUF-based security label production of CSNPs (Cornstarch NanoParticle) from particulate foodstuffs using spin-coating method. a) Homogeneous distribution of CSNP/water colloidal dispersion at a rate of 1 g/100mL with the help of ultrasonic probes. b) Homogeneous distribution of erythrosine food dye at a concentration of 5mM (millimolar) into CSNP/water colloidal dispersion with the help of a magnetic mixer. c) Coating CSNP/water/erythrosine colloidal dispersion on the gelatin surface with a spin-coating device. D) Fluorescence microscope imaging of PUF-based security labels produced from particulate foodstuffs.
Figure 2. Optical microscope image showing CSNPs at 10× magnification after coating colloidal dispersion containing 1g/1mL of CSNP/water to glass substrate surface with spin-coating method.
Figure 3. Optical microscope image showing CSNPs at 10× magnification after coating colloidal dispersion containing 1g/5mL, 1g/10mL and 1g/100mL of CSNP/water to glass substrate surface with spin-coating method.
Figure 4. PUF-based security label consisting of particles randomly positioned on the glass surface by spin-coating method after adding erythrosine food dye at a concentration of 5 mM into colloidal dispersion containing 1g/100mL of CSNP/water.
Figure 5. Raman spectrum graph of the particles randomly positioned before and after washing by distributing CSNP/water/erythrosine (sample washed 3 times) colloidal dispersion on silicon substrate with spin-coating method at the rate of 1g/100mL and Raman spectrum graphs taken from CSNP, erythrosine solid.
Figure 6. FT-IR spectrum graph of the particles randomly positioned before and after washing by distributing the CSNP/water/erythrosine colloidal dispersion on the silicon substrate at a ratio of 1g/100mL and Fourier Transform Infrared Spectroscopy (FT-IR) graphs of the CSNP, erythrosine solids.
Figure 7. Adsorption graph showing the maximum amount of erythrosine that cornstarch particles can adsorb
Figure 8. Fluorescence microscope image taken at 10× magnification of PUF-based security labels produced from particulate foodstuffs on the surface of the gelatin with the spin-coating method of CSNP/water/erythrosine colloidal dispersion at a ratio of 1g/100mL.

### List of Elements

In the figures, the elements are shown with reference numbers for a better understanding of the invention, and the list is listed below.
1. Ultrasonic Probe
2. CSNP+Water
3. CSNP+Water+Erythrosine
4. Gelatin
5. Spin-coating
6. Uv
7. Fluorescent Microscope Image

### Detailed Description of the Invention

In this description, a method that is only for a better understanding of the subject and offers an PUF-based security label by using foodstuffs in a way that does not create any limiting effect is explained in detail.

With the invention, a security label system based on PUF has been created without the need for a complex infrastructure (production of PUF labels suitable for mass production without restrictions such as laborious, expensive device requirements consisting of multiple stages of production such as lithography methods) with a practical method (easy access to spin-coating device, atmospheric conditions and single stage of the method used, etc.) from foodstuffs by using particles of cornstarch and derivative particulate food products that are easy to obtain.

After the homogeneous distribution of corn starch particles in water, security labels were produced by distributing the CSNPs at random locations by using the centrifugal forces acting on the substrate surface with the spin-coating method.

A spin-coating is a method used to form a thin film layer on flat surfaces. The substrate material to be coated (gelatin (4), etc.) is fixed from the bottom to the part where the sample chamber is located with vacuum support in the device (spin-coater). In this way, the substrate stays straight while making the rotation and prevents it from being exposed to axial sliding. The coating material is left in the center of the substrate surface with the help of a micropipette. The solvent is removed from the coating material in liquid form due to the effect of the rotation speed to obtain a film in solid form on the surface. There are parameters that are critical in creating a film layer. These parameters are the viscosity of the dispersion and the rotation speed of the device.

While there is a linear relationship between dispersion viscosity and film thickness, there is an inversely proportional situation between rotation speed and film thickness.

In the invention method, the infrastructure of the spin-coating method is used in order to distribute the CSNPs separately from each other rather than creating a film on the surface of the PUF-based security label particles produced from particulate foodstuffs. In this sense, a colloidal dispersion distributed homogeneously in low viscosity water is used. Concentration studies have been conducted to determine the security label production recipe produced from CSNPs. The concentration constitutes one of the parameters of the study so that the particles can be distributed randomly and separately from each other. On the other hand, the effect of rotation speed, which is a device parameter in the production of PUF-based security labels from particulate food materials, also has an important effect on the distribution of CSNPs. With the increase of the rotation speed (500-4000 rpm), the separation of CSNPs from each other becomes easier, and it is known that the particles are clustered together with the decrease of the rotation speed.

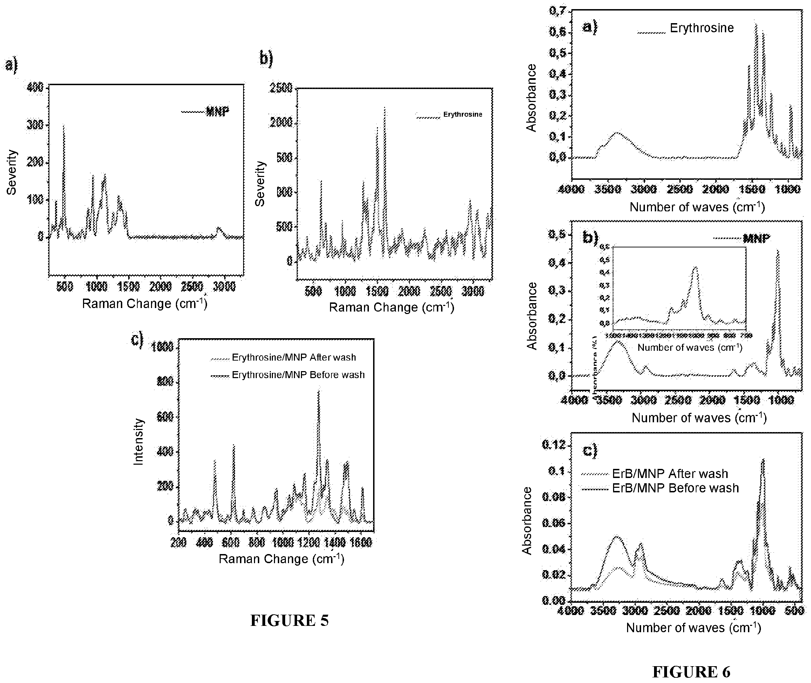

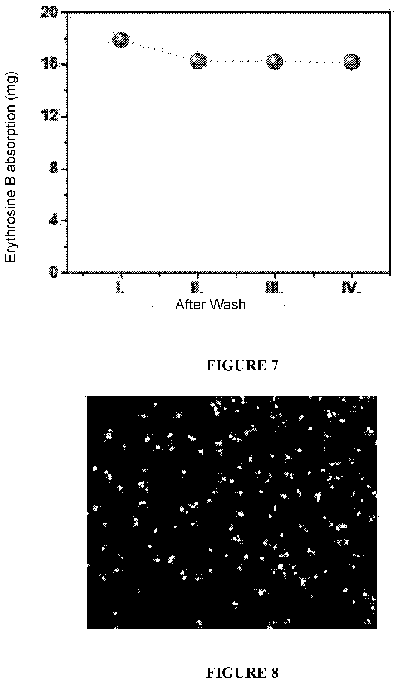

In the invention method, the ability of CSNPs to adsorb food dyes has been studied in order to increase the security level of surfaces produced based on PUF from particulate foodstuffs. To 1 mL (Milliliters) of a homogeneously dispersed aqueous colloidal dispersion containing CSNPs, 5 mM by weight of preferably erythrosine food dye was added (Erythrosine was used as an example, and the important thing here is that the substance to be used is dissolved in water, and treatment in solvents that do not contain toxicity in terms of use in the food and pharmaceutical industry can also be confirmed by different methods such as fluorescent microscope, Raman, FT-IR. Therefore, it can be used in other substances according to this definition). 50 µL (microliters) by volume was taken from the colloidal dispersion and left on the substrate surface and a spin-coating process was applied. As a result of the fluorescent microscope images taken, it was observed that only randomly distributed starch particles on the substrate surface showed fluorescence. In order to decide whether CSNPs have the ability to adsorb erythrosine food dye, colloidal dispersion containing CSNP-water-erythrosine was performed at a rate of 20 minutes and 4000 rpm. (20 minutes of 4000 rpm is enough for the CSNP particles to completely settle. In longer periods of time, the result was 20 minutes, as it would not change.) Here, CSNP/erythrosine/water colloidal dispersion was centrifuged. The solvent was removed (aqueous erythrosine) and washed 3 times with the same volume of distilled water. Although the object here is to remove excess erythrosine and erythrosine is a material soluble in water, it is aimed to show that erythrosine does not completely move away from the structure even if washing is performed due to the ability of CSNP to adsorb erythrosine. The solid particles obtained after washing are in the color of erythrosine (red color). Fluorescence microscope images (Figure 8), Raman spectra (Figure 5) and FT-IR spectra (Figure 6) support the gains obtained after the PUF-based security labels are produced to ensure that the erythrosine is adsorbed by the CSNPs after the washing process. In summary, even after washing 3 times, erythrosine dye can be adhered to CSNP and can be characterized by different methods mentioned above.

In line with the results obtained, it was determined that CSNPs adsorb erythrosine food dye. In this way, an PUF-based security label is produced from particulate food materials that do not contain toxic materials for human health, can emit at specific wavelengths, are randomly positioned on the surface, are decorated with an additional security layer, and offer the flexibility to be integrated with different confirmation methods (for example: Raman spectroscopy, Fourier-transform infrared spectroscopy (FT-IR), Fluorescent microscope).

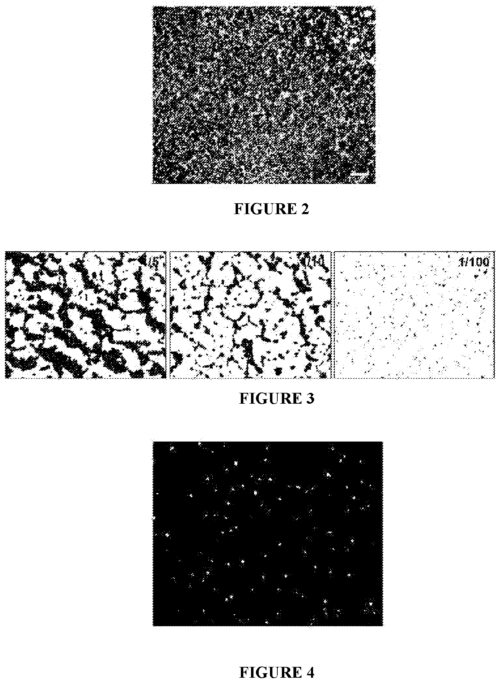

Exemplary Embodiment 1:
In the method of application of the invention, CSNP/water was taken into a beaker at a rate of 1g/1mL by weight. CSNPs were homogeneously distributed in water for 20 minutes with the help of an ultrasonic probe (1). 50 microliters were dropped on 1×1 cm² glass substrate and spin-coating was applied at 4000 rpm for 30 s (seconds). It is seen that the particles are aggregated on the surface when the optical microscope images taken at 10× magnification are examined. (Figure 2) In order to distribute CSNPs separately from each other, cornstarch concentration was reduced, and cornstarch/water ratio was continued as 1g/5mL, 1g/10mL and 1g/100mL under the above-mentioned conditions (Figure 3). As a result of the optical microscope images, the concentration ratio in which the CSNPs were distributed separately from each other was determined as 1g/100mL. When the surfaces produced at 1g/5mL and 1g/10mL cornstarch/water ratios are examined, it is seen that the particles start to separate but the clusters continue.

Exemplary Embodiment 2:
In this application method, 1g/100mL of CSNP/water was taken into the beaker. CSNPs were homogeneously distributed in water for 20 minutes with ultrasonic probes (1). Erythrosine food dye was added to the colloidal dispersion at a concentration of 5 mM by weight. The dissolution of erythrosine in water was continued with a magnetic stirrer for 20 minutes. A volume of 50 µL was taken from the colloidal dispersion containing CSNP-water-erythrosine with the help of a micropipette and dropped onto the glass substrate followed by 30 s (seconds) spin-coating at 4000 rpm. When the fluorescent microscope images taken at 10× magnification were examined, it was observed that there were particles randomly distributed on the substrate surface and fluorescing (Figure 4).

Exemplary Embodiment 3:
In this application method, the ability of CSNPs, which are critical in the production of the PUF-based security label concept from particulate foodstuffs, to adsorb food dyes is shown. 1g/100 mL of CSNP/water was taken into the beaker. CSNPs were distributed homogeneously in water for 20 minutes during the process with the help of an ultrasonic probe (1). Erythrosine food dye was added at a concentration of 5 mM by weight in colloidal dispersion. The dissolution of erythrosine in water was continued with a magnetic stirrer for 20 minutes. Afterwards, the colloidal dispersion taken from the beaker was taken into centrifuge tubes and treated in the centrifuge device for 20 minutes. The water-erythrosine solution in the upper part was separated so that the CSNPs collapsed at the bottom of the centrifuge tube. The precipitated CSNPs were passed through purified water 3 times and the centrifugation processes were continued and the washing process was applied.

After washing, the moisture of the precipitated CSNPs in the centrifuge tube was removed in the desiccator device and a solid form was obtained. It was characterized by Raman spectroscopy (Figure 5.), FT-IR spectroscopy (Figure 6.) and Fluorescence microscopy (Figure 8) to confirm that CSNPs in solid form adsorb erythrosine food dye. As a result, CSNPs adsorb erythrosine food dyes. In this way, in PUF-based security label systems produced from particulate foodstuffs, it has enabled multi-layer security levels to be achieved by adsorbing food dyes that can fluoresce CSNPs at specific wavelengths.

Exemplary Embodiment 4:
1g/100mL in this application method. It is important that it is 1g/100mL because this ratio is essential so that the CSNPs can be produced separately from each other so that there is no aggregation formation. Aggregate formation is seen at 1g/100mL and 1g/10mL concentrations. Aggregate formation is a condition that we do not want in the PUF system.

Therefore, it is critical for the formation of discrete and random structures. (When the 1g/100mL CSNP/water ratio is further diluted, the frequency of the particles decreases, and a sparse image formation is observed. The random reproducibility of PUF security tags is confirmed by image algorithms, and the frequency of the tags in randomness analysis is of great importance in this sense. In this sense, it is important to produce separate particles intensively on the surface.) CSNP/water was taken into the beaker. CSNPs were homogeneously distributed in water for 20 minutes with ultrasonic probes (1). Erythrosine food dye was added to the colloidal dispersion at a concentration of 5 mM by weight. The dissolution of erythrosine in water was continued for 20 min (min) with a magnetic stirrer. As a substrate, gelatin (4) substrate, which constitutes a significant part of the security labels produced on the basis of PUF from particulate foodstuffs, was prepared. The powders of the gelatin (4) were weighed 10 g by weight and taken in a beaker. A volume of 60 mL of distilled water was added to it and continued until a homogeneous dissolution process took place on the hot plate. After the polystyrene was poured into the molds, it was kept at room temperature for 30-60 minutes until it turned into a solid form. After the gelatin (4) extracted from the molds was cut into 1×1 cm² size, the solid form gelatin (4) prepared by taking 50 µL (microliters) by using a micropipette from the colloidal dispersion containing CSNP-water-erythrosine was dripped on the substrate. Spin-coating was applied for 30 s (seconds) at 4000 rpm. When the fluorescent microscope images taken at 10× magnification were examined, it was determined that discrete and randomly distributed fluorescent particles were produced (Figure 8). In addition to the production of all materials used in steps Exemplary Embodiment 1 and Exemplary Embodiment 2 and Exemplary Embodiment 3 from particulate foodstuffs that do not contain any hazard to human health, the concept of an PUF-based security label has been developed with Exemplary Embodiment 3, which includes a multi-layer security level that can be characterized by different authentication mechanisms.

Some of the features that make the invention different from the state of the art are listed below.
- The use of random structures created from foodstuffs by the spin-coating method as a security label that cannot be physically cloned,
- The use of cornstarch in edible physically unclonable security labels,
- The use of labels that can produce specific responses under different material-specific effects with characterization methods using different operating systems such as fluorescent microscopy, Raman Spectroscopy and FT-IR, taking advantage of the ability of cornstarch to adsorb functional molecules such as food dye,
- Increasing the coding capacities of PUFs produced from particulate foodstuffs with special answers under different effects by increasing the diversity of food dyes.

In the invention, a PUF-based security label was produced by using foodstuffs, which would not create a threatening element even in human contact or ingestion on the gelatin (4) substrate.

In the invention, erythrosine-added CSNPs, which are separated from each other and randomly positioned, were produced on the substrate by using the infrastructure of the spin-coating method. A functionally effective security label is presented with materials such as cornstarch and food dyes that are easy to reach, cost-effective and easy to produce. In addition to diverse commercial fluorescent materials such as erythrosine and FDA-approved fluorescent materials, an original and functional production method is offered that has no material limitation in terms of decoration with food dyes by using materials with particulate adsorption capability such as CSNP.

Based on the information above, the invention is a method of producing a PUF-based security label, characterized in that, after the homogeneous distribution of the particles of foodstuffs (e.g., cornstarch) in water, the centrifugal forces acting on the substrate surface are used with the spin-coating method to produce security labels by distributing the CSNPs in discrete and random locations.

If the invention is to be stated in more detail, it is a functionally effective PUF-based security label production method with easy to reach, low cost, easy to produce materials, characterized in that it comprises the following:
- Positioning the coating material at the center of the substrate material surface,
- Placing the CSNP and water in the beaker and distributing the CSNPs homogeneously into the water in the time period determined by the ultrasonic probe (1),
- Adding 5 mM of erythrosine food dye by weight to 1 mL of the homogeneously dispersed aqueous colloidal dispersion containing the CSNPs (Since fluorescent microscope images are used in the encryption of the PUF labels, it is critical for the image analysis that the images taken are clear and distinguishable. When erythrosine is added at low molarities, 5 millimolar is used and clear images cannot be taken due to the poor radiation in the fluorescent microscope and the inability to see the structures clearly.

- Colloidal dispersion of the prepared CSNP/erythrosine is processed 3 times with distilled water to remove excess erythrosine over CSNPs by centrifugation at 4000 rpm for 20 minutes. Determining the presence of CSNPs in the structure due to their ability to adsorb erythrosine after washing.
- Taking 50 µL of CSNP/erythrosine by volume from the colloidal dispersion, leaving it on the substrate surface and applying a spin-coating process,
- Rotation of the substrate material at 4000 rpm (revolutions per minute) and random distribution of erythrosine-added food particles (e.g., erythrosine adsorbed cornstarch particles) on the surface,
- Obtaining PUF surfaces consisting of separated and randomly positioned particles in solid form on the surface by removing the solvent from the coating material in liquid form with the effect of rotation speed,
- Obtaining a security label with physically unclonable (PUF) based fluorescent radiation from particulate foodstuffs.

In erythrosine/CSNP/Water colloidal dispersion, the process of separating the adsorbed CSNPs of erythrosine is provided by a practical method such as centrifugation. After the precipitation process of CSNPs, the erythrocyte-water solution remaining on the surface is removed. Then, excess erythrosine adsorbed on CSNP is removed by adding an equal volume of distilled water. After washing, it was found that erythrosine was adsorbed by CSNPs and preserved its presence in the structure even after 3 times washing.

3 repetitions are sufficient for washing. The purpose of washing is to determine the initial erythrosine concentration and the amount of erythrosine adsorption (milligrams) of CSNPs after 3 times of washing and to see that they bind to the particle surface. Therefore, there are visuals in Figure 7.

The foodstuff mentioned in the method is cornstarch.

The substrate mentioned in the method is gelatin (4).

Colloidal dispersion is used to completely cover the substrate surface. For example, the substrate is taken from the colloidal dispersion in the range of 50-100 microliters to completely cover the surface (1x1 cm²).

The substrate material is gelatin (4).

The material to be coated is colloidal dispersion containing erythrosine adsorbed CSNPs.

## Claims

1. A security label production method that cannot be physically cloned, wherein it comprises the following process steps:
• Positioning the coating material at the center of the substrate material surface,
• Placing food particles and water in the beaker and distributing homogeneously into the water in the time period determined by the ultrasonic probe (1),
• Adding erythrosine food dye to homogeneously dispersed aqueous colloidal dispersion containing food particles,
• Washing with distilled water 3 times to remove excess erythrosine from the colloidal dispersion of the prepared erythrosine-added food particles by centrifugation,
• Determining the presence of food particles after washing due to their ability to adsorb erythrosine,
• Taking the volume from the colloidal dispersion and leaving it on the substrate surface and applying the spin-coating process,
• Randomly distributing erythrosine-added food particles on the surface by rotating the substrate material at the specified speed,
• Removing the solvent from the coating material in liquid form with the effect of rotation speed and obtaining discrete and randomly positioned physically unclonable surfaces on the surface in solid form,
• Obtaining a security label from particulate foodstuffs that does not physically clone based fluorescence radiation.

2. A method according to Claim 1, **characterized in that** the centrifugation process is at 4000 rpm for 20 minutes.

3. A method according to Claim 1, **characterized in that** the rotation speed of said substrate material is 4000 rpm.

4. A method according to Claim 1, **characterized in that** said colloidal dispersion is a dispersion of cornstarch particles/erythrosine mixture.

5. A method according to Claim 1, **characterized in that** said colloidal dispersion is a dispersion of 50 µL cornstarch particles/erythrosine mixture.

6. A method according to Claim 1, **characterized in that** the substance added to said aqueous colloidal dispersion is 5 mM erythrosine food coloring by weight per 1 mL by volume.

7. A method according to Claim 1, **characterized in that** said erythrosine-added food particles are erythrosine-adsorbed cornstarch particles.

8. A method according to Claim 1, **characterized in that** said foodstuff is cornstarch.

9. A method according to Claim 1, **characterized in that** said substrate is a substrate of gelatin (4).

10. A method according to Claim 1, **characterized in that** colloidal dispersion is used to completely cover the substrate surface.

11. A method according to Claim 1, **characterized in that** colloidal dispersion in the range of 50-100 microliters is used to completely cover the substrate surface of 1x1 cm².

12. A method according to Claim 1, **characterized in that** said substrate material is gelatin (4).

13. A method according to Claim 1, **characterized in that** said material to be coated is colloidal dispersion comprising erythrosine adsorbed cornstarch particles.

14. A method according to Claim 1, **characterized in that** the food particles and water are in the ratio of 1g/100mL per beaker.

15. A method according to Claim 1 or Claim 14,
**characterized in that** said food particles are cornstarch particles.

## Patentansprüche

1. Ein Herstellungsverfahren für Sicherheitsetiketten, das nicht physisch geklont werden kann, wobei es die folgenden Prozessschritte umfasst:
• Positionieren des Beschichtungsmaterials in der Mitte der Oberfläche des Substratmaterials,
• Einbringen von Lebensmittelpartikel und Wasser in das Becherglas und homogenes Verteilen in das Wasser in dem von der Ultraschallsonde (1) bestimmten Zeitraum,
• Zugabe von Erythrosin-Lebensmittelfarbstoff zu einer homogen dispergierten wässrigen kolloidalen Dispersion, die Lebensmittelpartikel enthält,
• 3-maliges Waschen mit destilliertem Wasser, um überschüssiges Erythrosin aus der kolloidalen Dispersion der vorbereiteten mit Erythrosin versetzten Lebensmittelpartikel durch Zentrifugation zu entfernen,
• Bestimmung des Vorhandenseins von Lebensmittelpartikel nach dem Waschen aufgrund ihrer Fähigkeit, Erythrosin zu adsorbieren,
• Entnehmen des Volumens aus der kolloidalen Dispersion und Belassen auf der Substratoberfläche und Anwenden des Spin-Coater- Prozesses,
• Zufällige Verteilung von mit Erythrosin versetzten Lebensmittelpartikeln auf der Oberfläche durch Rotation des Substratmaterials mit der vorgegebenen Geschwindigkeit,
• Entfernen des Lösungsmittels aus dem Beschichtungsmaterial in flüssiger Form unter dem Einfluss der Rotationsgeschwindigkeit und Erhalten diskreter und zufällig positionierter physikalisch nicht klonierbarer Oberflächen auf der Oberfläche in fester Form,
• Gewinnung eines Sicherheitsmerkmals aus partikelförmigen Lebensmitteln, das nicht auf physikalisch kopierbarer Fluoreszenzstrahlung basiert.

2. Ein Verfahren nach Anspruch 1, **dadurch gekennzeichnet, dass** der Zentrifugationsprozess bei 4000 U/min für 20 Minuten erfolgt.

3. Ein Verfahren nach Anspruch 1, **dadurch gekennzeichnet, dass** die Rotationsgeschwindigkeit des genannten Substratmaterials 4000 U/min beträgt.

4. Ein Verfahren nach Anspruch 1, **dadurch gekennzeichnet, dass** es sich bei der genannten kolloidalen Dispersion um eine Dispersion aus Maisstärkepartikeln/Erythrosin-Gemisch ist.

5. Ein Verfahren nach Anspruch 1, **dadurch gekennzeichnet, dass** es sich bei der genannten kolloidalen Dispersion um eine Dispersion von 50 µL Maisstärkepartikeln/Erythrosin-Gemisch handelt.

6. Ein Verfahren nach Anspruch 1, **dadurch gekennzeichnet, dass** die der genannten wässrigen kolloidalen Dispersion zugesetzte Substanz 5 mM Erythrosin-Lebensmittelfarbstoff bezogen auf das Gewicht pro 1 mL Volumeneinheit ist.

7. Ein Verfahren nach Anspruch 1, **dadurch gekennzeichnet, dass** es sich bei den genannten mit Erythrosin versetzten Lebensmittelpartikeln um Erythrosin-adsorbierte Maisstärkepartikel handelt.

8. Ein Verfahren nach Anspruch 1, **dadurch gekennzeichnet, dass** es sich bei dem genannten Lebensmitttel um Maisstärke handelt.

9. Ein Verfahren nach Anspruch 1, **dadurch gekennzeichnet, dass** es sich bei dem genannten Substrat um ein Substrat aus Gelatine (4) handelt.

10. Ein Verfahren nach Anspruch 1, **dadurch gekennzeichnet, dass** zur vollständigen Bedeckung der Substratoberfläche eine kolloidale Dispersion verwendet wird.

11. Ein Verfahren nach Anspruch 1, **dadurch gekennzeichnet, dass** zur vollständigen Bedeckung der Substratoberfläche von 1x1 cm² eine kolloidale Dispersion im Bereich von 50-100 Mikroliter verwendet wird.

12. Ein Verfahren nach Anspruch 1, **dadurch gekennzeichnet, dass** es sich bei dem genannten Substratmaterial um Gelatine (4) handelt.

13. Ein Verfahren nach Anspruch 1, **dadurch gekennzeichnet, dass** es sich bei dem genannten zu beschichtenden Material um eine kolloidale Dispersion handelt, die mit Erythrosin adsorbierte Maisstärkepartikel umfasst.

14. Ein Verfahren nach Anspruch 1, **dadurch gekennzeichnet, dass** die Lebensmittelpartikel und das Wasser im Verhältnis 1 g/100 mL pro Becherglas vorliegen.

15. Ein Verfahren nach Anspruch 1 oder Anspruch 14, **dadurch gekennzeichnet, dass** es sich bei den genannten Lebensmittelpartikeln um Maisstärkepartikel handelt.

## Revendications

1. Procédé de fabrication d'une étiquette de sécurité ne pouvant pas être clonée physiquement, lequel comprend les étapes du processus suivantes :
• Positionner le matériau de revêtement au centre de la surface du matériau de substrat,
• Placer les particules alimentaires et l'eau dans le bécher et les répartir de manière homogène dans l'eau pendant la durée déterminée par la sonde ultrasonore (1),
• Ajouter du colorant alimentaire érythrosine à la dispersion colloïdale aqueuse dispersée de manière homogène contenant les particules alimentaires,
• Laver 3 fois à l'eau distillée pour éliminer l'excès d'érythrosine de la dispersion colloïdale des particules alimentaires préparées auxquelles est ajoutée de l'érythrosine par centrifugation,
• Déterminer la présence de particules alimentaires après le lavage en raison de leur capacité à adsorber l'érythrosine,
• Prélever un volume de la dispersion colloïdale, le déposer à la surface du substrat et appliquer le processus de revêtement par centrifugation,
• Distribuer de manière aléatoire des particules alimentaires auxquelles est ajoutée de l'érythrosine à la surface en faisant tourner le matériau du substrat à la vitesse spécifiée,
• Eliminer le solvant du matériau de revêtement sous forme liquide sous l'effet de la vitesse de rotation et obtenir les surfaces distinctes et positionnées de manière aléatoire physiquement non clonables sur la surface sous forme solide,
• Obtenir une étiquette de sécurité à partir de denrées alimentaires à particules qui ne clonent pas physiquement basé sur le rayonnement fluorescent.

2. Procédé de fabrication selon la revendication 1, **caractérisé en ce que** le processus de centrifugation s'effectue à 4 000 tr/min pendant 20 minutes.

3. Procédé de fabrication selon la revendication 1, **caractérisé en ce que** la vitesse de rotation dudit matériau de substrat est de 4 000 tr/min.

4. Procédé de fabrication selon la revendication 1, **caractérisé en ce que** ladite dispersion colloïdale est une dispersion d'un mélange de particules de fécule de maïs/d'érythrosine.

5. Procédé de fabrication selon la revendication 1, **caractérisé en ce que** ladite dispersion colloïdale est une dispersion de 50 µL d'un mélange de particules de fécule de maïs/d'érythrosine.

6. Procédé de fabrication selon la revendication 1, **caractérisé en ce que** la substance ajoutée à ladite dispersion colloïdale aqueuse est de 5 mM de colorant alimentaire érythrosine en poids par 1 mL en volume.

7. Procédé de fabrication selon la revendication 1, **caractérisé en ce que** lesdites particules alimentaires auxquelles est ajoutée de l'érythrosine sont des particules de fécule de maïs sur lesquelles est adsorbée de l'érythrosine.

8. Procédé de fabrication selon la revendication 1, **caractérisé en ce que** ledit denrée alimentaire est de la fécule de maïs.

9. Procédé de fabrication selon la revendication 1, **caractérisé en ce que** ledit substrat est un substrat de gélatine (4).

10. Procédé de fabrication selon la revendication 1, **caractérisé en ce que** la dispersion colloïdale est utilisée pour recouvrir entièrement la surface du substrat.

11. Procédé de fabrication selon la revendication 1, **caractérisé en ce qu'**une dispersion colloïdale comprise entre 50-100 microlitres est utilisée pour recouvrir entièrement la surface du substrat de 1 × 1 cm².

12. Procédé de fabrication selon la revendication 1, **caractérisé en ce que** ledit matériau de substrat est de la gélatine (4).

13. Procédé de fabrication selon la revendication 1, **caractérisé en ce que** ledit matériau à être revêtu est une dispersion colloïdale comprenant des particules de fécule de maïs sur lesquelles est adsorbée de l'érythrosine.

14. Procédé de fabrication selon la revendication 1, **caractérisé en ce que** les particules alimentaires et l'eau sont présentes dans un rapport de 1 g/100 mL par bécher.

15. Procédé de fabrication selon la revendication 1 ou la revendication 14 **caractérisé en ce que** lesdites particules alimentaires sont des particules de fécule de maïs.
